# EUROPEAN PATENT SPECIFICATION

(11) **EP 2 757 732 B1**
(45) Date of publication and mention of the grant of the patent: **02.10.2019**
(21) Application number: 13179033.9
(22) Date of filing: 02.08.2013
(51) Int. Cl.: H04L 5/00, H04L 25/02

(54) **Channel estimation method for overcoming channel discontinuity between sub-bands of an orthogonal frequency division multiplexing (ofdm) system**
Kanalschätzungsverfahren zur Überwindung einer Kanalunterbrechung zwischen Subbändern eines orthogonales Frequenzmultiplexsystems (OFDM)
Procédé d'estimation de canal pour surmonter la discontinuité de canal entre des sous-bandes d'un système de multiplexage par répartition de la fréquence orthogonale (ofdm)

(30) Priority: 17.01.2013 CN 201310018251; 07.04.2013 WO PCT/CN2013/073826
(43) Date of publication of application: 23.07.2014
(73) Proprietor: Spreadtrum Communications (Shanghai) Co., Ltd., Pudong New Area Shanghai 201203 (CN)
(72) Inventor: Shen, Xuqiang, Pudong New Area Shanghai 201203 (CN); Cao, Qiang, Pudong New Area Shanghai 201203 (CN); Dong, Xiaojian, Pudong New Area Shanghai 201203 (CN)
(74) Representative: Loyer & Abello

(56) References cited:
- US-A1- 2005 105 461
- US-A1- 2010 296 438
- US-B1- 6 768 714
- DO HYUN PARK ET AL: "Channel estimation with pilot signal design for terrestrial UDTV using MISO technology", CONSUMER ELECTRONICS (ICCE), 2012 IEEE INTERNATIONAL CONFERENCE ON, IEEE, 13 January 2012 (2012-01-13), pages 207-208, XP032124855, DOI: 10.1109/ICCE.2012.6161831 ISBN: 978-1-4577-0230-3

## Description

In existing Long Term Evolution (LTE) systems, the base station sends data to a terminal by a beam which is formed in a transmission mode 7 or 8, and channel discontinuity frequently occurs among sub-bands in the frequency domain after forming the beam. In the general channel estimation method of the Orthogonal Frequency Division Multiplexing (OFDM) system, channels are generally considered to be continuous, and channel estimation results are obtained after the selected descrambled pilot is smoothed.

Further, in existing OFDM based systems the Wiener algorithm and/or a Fourier transformation may be used for channel estimation. However, these methods are often inadequate when communication channels are not continuous. The existing methods also include simple estimation techniques, such as linear value insertion. However, some differences exist between performance of the linear interpolation algorithm and that of other methods, and the linear interpolation algorithm is seldom used in current communication systems mainly because it is quite difficult to suppress the noise properly by the linear interpolation algorithm.

US 6 768 714 B1 discloses a frequency correction process, and US 2010/0296438 A1 discloses a method, a system and a receiver device which provide timing and frequency correction in a spatial division multiple access (SDMA) system.

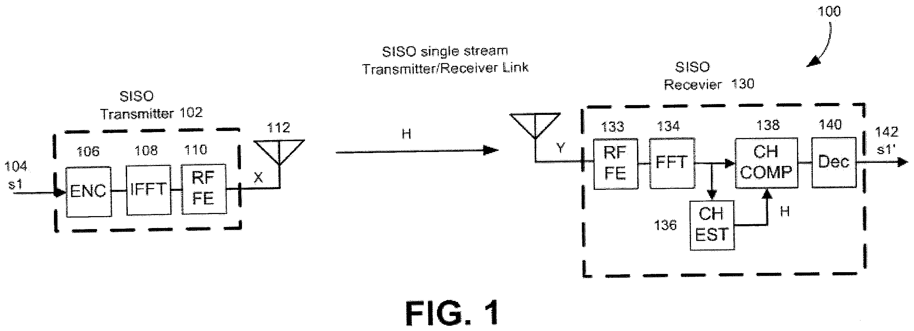

In an OFDM receiver, channel smoothing is performed on the estimated channel in order to reduce the effects of noise on the estimated channel, thereby improving the system packet error performance. **FIG. 1** illustrates a single stream OFDM transmitter 102 accepting an input stream s1 104 to a baseband encoder 106 which encoded stream is provided to an inverse fast Fourier transform (IFFT) 108 to produce baseband subcarriers such as 1 through 1024 or 1 through 512, and the subcarriers are modulated to a carrier frequency for coupling to an antenna 112 as transmitted signal X. The transmitted signal X is coupled through a channel with a frequency dependent characteristic H to receive antenna 132 of receiver 130 to form received signal Y=HX. The receiver 130 receives signal Y, which is baseband converted using RF Front End 133 and applied to FFT 134 to channel compensator 138 and to decoder 140 which generates the received stream S1'. Channel estimator 136 estimates the channel characteristic H during a long preamble interval, and the channel characteristic H is applied to channel compensator 138.

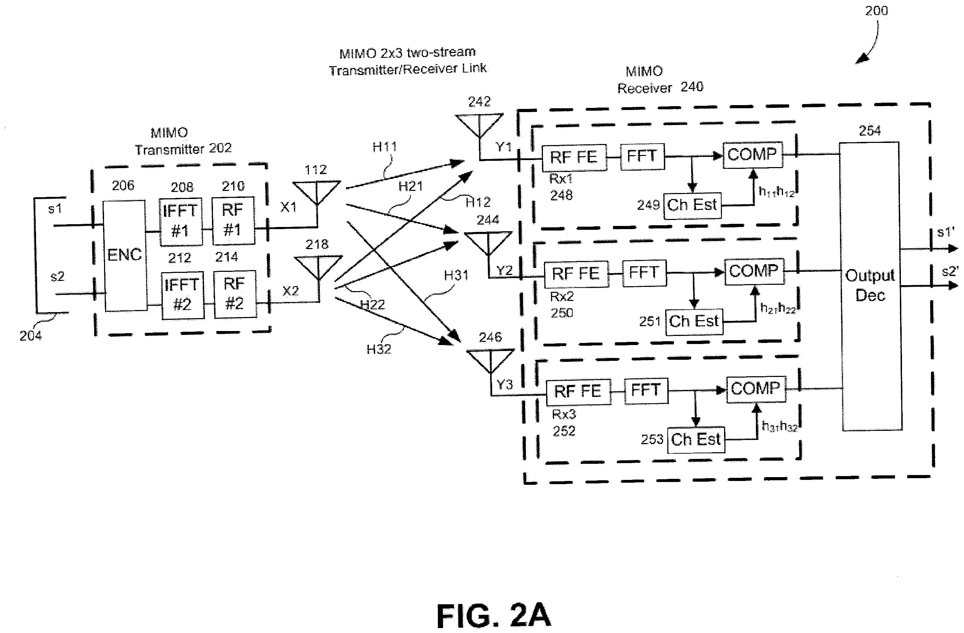

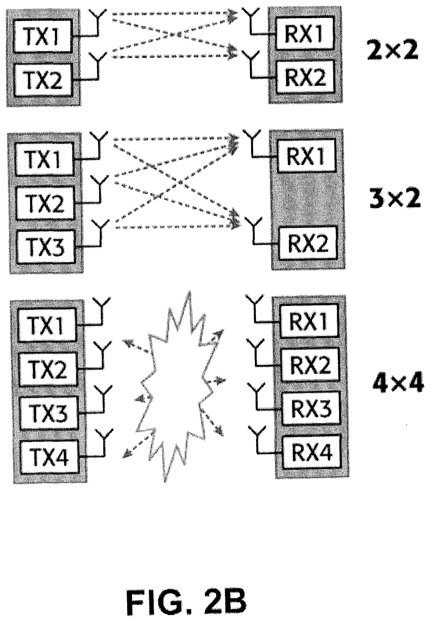

**FIG. 2A** illustrates a Multiple Input Multiple Output (MIMO) receiver 240 operative on two transmit streams s1 and s2 204 encoded 206 and provided to first stream IFFT 208 which generates baseband subcarriers, which are provided to RF modulator and amplifier 210 and coupled as X1 to antenna 216. Second stream IFFT 212 and RF modulator and amplifier 214 similarly generate subcarriers which are upconverted and coupled to antenna 218 as X2. Receiver 240 has three antennas 242, 244, 246, which couple to receivers 248, 250, 252 and to output decoder 254 which forms decoded streams s1' and s2'. Each receiver 248, 250, 252 performs the receive functions as described for FIG. 1, however the channel estimation function 249, 251, 253 for each receiver uses the long preamble part of the packet to characterize the channel from each transmit antenna 216, 218 to each receive antenna 242, 244, 246. For example, receiver 248 must characterize and compensate the channel h11 from 216 to 242 as well as channel h12 from 218 to 242. Each channel characteristic h11 and h22 is a linear array containing real and imaginary components for each subcarrier, typically 1 through 1024. The channel estimator 249 therefore contains h11 and h12, estimator 251 contains h21 and h22, and channel estimator 253 contains h31 and h32. The 2.times.3 MIMO case of FIG. 2 shows the case where the number of remote transmitters Nt=2 and the number of local antennas and receivers Nr=3. For a MIMO receiver where the number of remote transmitters is Nt and the number of local antennas and receivers is Nr, the Nt*Nr channels have a frequency response which may be smoothed over a range of subcarrier frequencies using a finite impulse response (FIR) filter for I and Q channels. Such a channel smoothing filter would require a total of 2*Nt*Nr filters. For a 13 tap FIR filter, each tap would have an associated multiplier, so such an implementation would require 13 complex multipliers for each filter, or 26*Nt*Nr multipliers total at each receiver station.

It is to be appreciated that communication interfaces can have other MIMO configurations. **FIG. 2B** is a simplified diagram illustrating various types of MIMO configuration.

Accordingly, due to channel discontinuity, the smoothing processing will result in significant errors in the channel estimation results. These errors affect the performance, and signal quality. Thus, a method for obtaining more accurate channel estimation results is needed.

In one aspect of the invention, a method of processing communication signals is provided. The method includes receiving a communication signal in a time domain, converting the communication signal to a frequency domain, providing a plurality of resource blocks based on the communication signal in the frequency domain, the plurality of resource blocks including a first resource block and a second resource block, selecting a first plurality of pilot signals from the first resource block and a second plurality of pilot signals from the second resource block, determining a first set of phase and amplitude differences among the first plurality of pilot signals, determining a second set of phase and amplitude differences among the second plurality of pilot signals, determining a third set of phase and amplitude differences between the first plurality of pilot signals and the second plurality of pilot signals, generating a first waveform by using at least the first and third set of phase and amplitude differences to adjust one of the first plurality of pilot signals, applying a smoothing filter against the first waveform to generate a second waveform, generating a third waveform by using at least the first and third set of phase and amplitude differences to perform a reverse adjustment to the second waveform, and converting the third waveform from the frequency domain to the time domain.

The method may further include determining a phase difference between a first pilot signal and a second pilot signal, wherein the first plurality of pilot signals includes the first pilot signal at a first position of the first resource block, and the second plurality of pilot signals includes the second pilot signals at the first position of the second resource block, calculating the phase difference between the first pilot and the second pilot within the first resource block, and calculating the amplitude difference between the first pilot and the second pilot within the first resource block. The smoothing filter may comprise a Weiner filter, a discrete Fourier Transform, etc.

The method may further include generating the first waveform using at least the second set of phase and amplitude differences. The communication signal may comprise an Orthogonal Frequency Division Multiplexing (OFDM) Signal, a received via Long Term Evolution (LTE) communication network, etc.

In another aspect, a system for processing communication signals is provided. The system includes a memory device, and a computer processor in communication with the memory device. The memory device includes sets of instructions when executed by the computer processor, cause the computer processor to: receive a communication signal in a time domain, convert the communication signal to a frequency domain, provide a plurality of resource blocks based on the communication signal in the frequency domain, the plurality of resource blocks including a first resource block and a second resource block, select a first plurality of pilot signals from the first resource block and a second plurality of pilot signals from the second resource block, determine a first set of phase and amplitude differences among the first plurality of pilot signals, determine a second set of phase and amplitude differences among the second plurality of pilot signals, determine a third set of phase and amplitude differences between the first plurality of pilot signals and the second plurality of pilot signals, generate a first waveform by using at least the first and third set of phase and amplitude differences to adjust one of the first plurality of pilot signals, apply a smoothing filter against the first waveform to generate a second waveform, generate a third waveform by using at least the first and third set of phase and amplitude differences to perform a reverse adjustment to the second waveform, and convert the third waveform from the frequency domain to the time domain.

The system may further include that the sets of instructions further cause the computer processor to determine a phase difference between a first pilot signal and a second pilot signal, wherein the first plurality of pilot signals including the first pilot signal at a first position of the first resource block, and the second plurality of pilot signals including the second pilot signals at the first position of the second resource block, calculate the phase difference between the first pilot and the second pilot within the first resource block, calculate the amplitude difference between the first pilot and the second pilot within the first resource block, and generate the first waveform using at least the second set of phase and amplitude differences.

In yet another aspect, a computer-readable medium for processing communication signals, the computer-readable medium having sets of instruction stored thereon is provided. The sets of instructions cause the computer to receive a communication signal in a time domain, convert the communication signal to a frequency domain, provide a plurality of resource blocks based on the communication signal in the frequency domain, the plurality of resource blocks including a first resource block and a second resource block, select a first plurality of pilot signals from the first resource block and a second plurality of pilot signals from the second resource block, determine a first set of phase and amplitude differences among the first plurality of pilot signals, determine a second set of phase and amplitude differences among the second plurality of pilot signals, determine a third set of phase and amplitude differences between the first plurality of pilot signals and the second plurality of pilot signals, generate a first waveform by using at least the first and third set of phase and amplitude differences to adjust one of the first plurality of pilot signals, apply a smoothing filter against the first waveform to generate a second waveform, generate a third waveform by using at least the first and third set of phase and amplitude differences to perform a reverse adjustment to the second waveform, and convert the third waveform from the frequency domain to the time domain.

Further, the computer-readable medium may cause the computer to calculate a phase difference between a first pilot signal and a second pilot signal, wherein the first plurality of pilot signals including the first pilot signal at a first position of the first resource block, and the second plurality of pilot signals including the second pilot signals at the first position of the second resource block, calculate the phase difference between the first pilot and the second pilot within the first resource block, calculate the amplitude difference between the first pilot and the second pilot within the first resource block, and generate the first waveform using at least the second set of phase and amplitude differences. The communication signal may be received via Long Term Evolution (LTE) communication network.

A further understanding of the nature and advantages of the present invention may be realized by reference to the remaining portions of the specification and the drawings, wherein like reference numerals are used throughout the several drawings to refer to similar components and preferred embodiments of the invention are described by way of example only. In some instances, a sub-label is associated with a reference numeral to denote one of multiple similar components. When reference is made to a reference numeral without specification to an existing sub-label, it is intended to refer to all such multiple similar components.
**FIG. 1** illustrates a single stream OFDM transmitter.
**FIG. 2A** illustrates a Multiple Input Multiple Output (MIMO) receiver.
**FIG. 2B** is a simplified diagram illustrating various types of MIMO configuration.
**FIGS. 3A** and **3B** illustrate a flow diagram for performing processing of communication signals, according to one embodiment of the invention.
**FIG. 4** illustrates a flow diagram for performing processing of communication signals, according to another embodiment of the invention.
**FIG. 5** illustrates waveform diagrams, according to one embodiment of the invention.
**FIG. 6** illustrates a waveform diagram, according to another embodiment of the invention.
**FIG. 7** illustrates a block diagram of an exemplary computer hardware system that may be used to implement various embodiments.

In the following description, for the purposes of explanation, numerous specific details are set forth in order to provide a thorough understanding of various embodiments of the present invention. It will be apparent, however, to one skilled in the art that embodiments of the present invention may be practiced without some of these specific details. In other instances, well-known structures and devices are shown in block diagram form.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Described herein, are embodiments directed to telecommunication. More specifically, various embodiments of the present invention provide techniques for channel estimation in OFDM communication systems. For example, these techniques may be used in TDD, FDD LTE, WCDMA, WiMax, Wifi, and/or other types of telecommunication systems. Depending on the application, various techniques according to the embodiments of the present invention can be implemented as a part of user terminals, base stations, embedded systems, hardware modules, software modules, and the like. Further, an artificially "continuous" sine wave in the frequency domain may be created to perform smoothing of the wave and then the original wave may be restored.

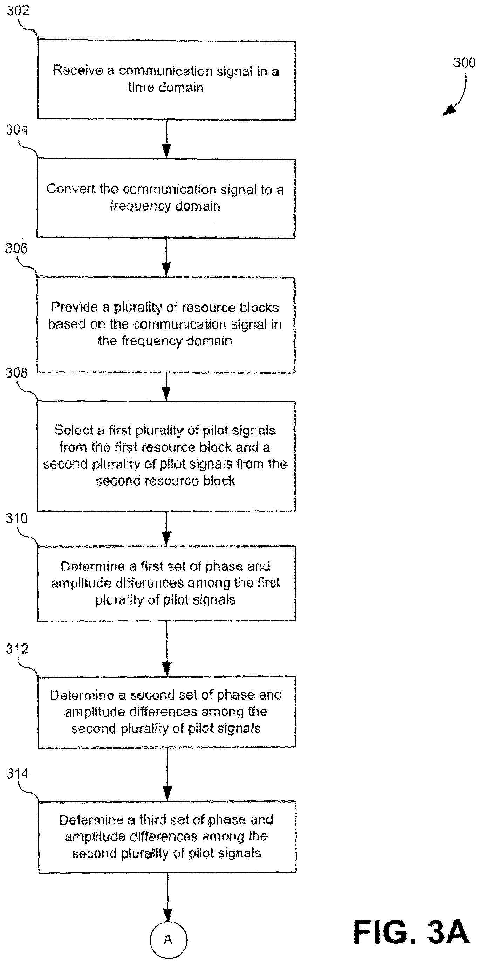

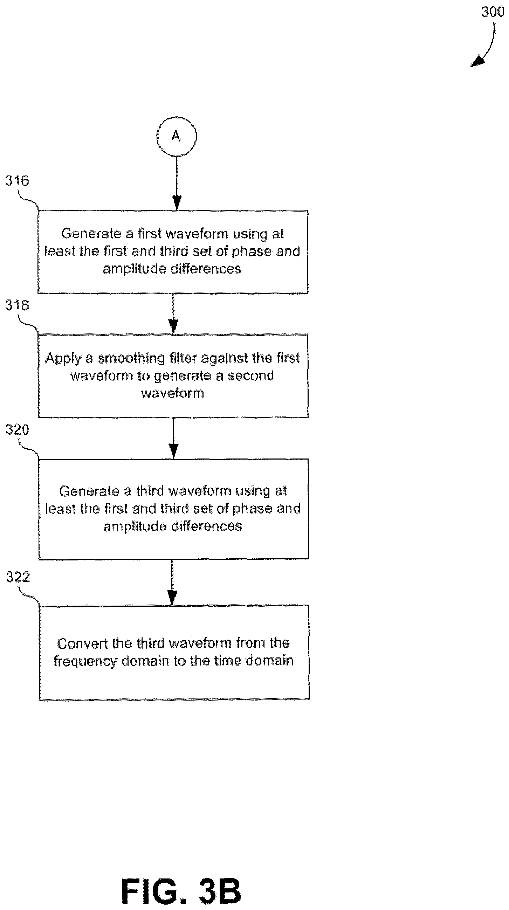

**FIGS. 3A** and **3B** illustrate a method 300 for performing processing of communication signals, according to one embodiment of the invention. At process block 302, a communication signal in a time domain is received. The communication signal is then converted to a frequency domain (process block 304).

At process block 306, multiple resource blocks based on the communication signal in the frequency domain are provided. In one embodiment, the multiple resource blocks include a first resource block and a second resource block; however, more resource blocks may be included. A first set of pilot signals may then be selected from the first resource block. Further, a second set of pilot signals may also be selected from the second resource block (process block 308).

Then, the difference between a first set of phase and amplitude among the first set of pilot signals is determined (process block 310) and the difference between a second set of phase and amplitude among the second set of pilot signals determined (process block 312). Finally, the difference between a third set of phase and amplitude differences among the second set of pilot signals is determined (process block 314).

The method 300 continues at point A to **FIG. 3B****.** At process block 316, a first waveform using at least the first and third set of phase and amplitude differences is generated. A smoothing filter is applied against the first waveform to generate a second waveform (process block 318). In one embodiment, the smoothing filter may include Weiner filter, a discrete Fourier transform, etc.

At process block 320, a third waveform is generated using at least the first and third set of phase and amplitude differences. Furthermore, a phase difference between a first pilot signal and a second pilot signal may be determined. In one embodiment, the first set of pilot signals including the first pilot signal at a first position of the first resource block, and the second set of pilot signals including the second pilot signals at the first position of the second resource block. Further, the phase difference between the first pilot and the second pilot within the first resource block may be calculated, and the amplitude difference between the first pilot and the second pilot within the first resource block may also be calculated. At process block 322, the third waveform may be converted from the frequency domain to the time domain.

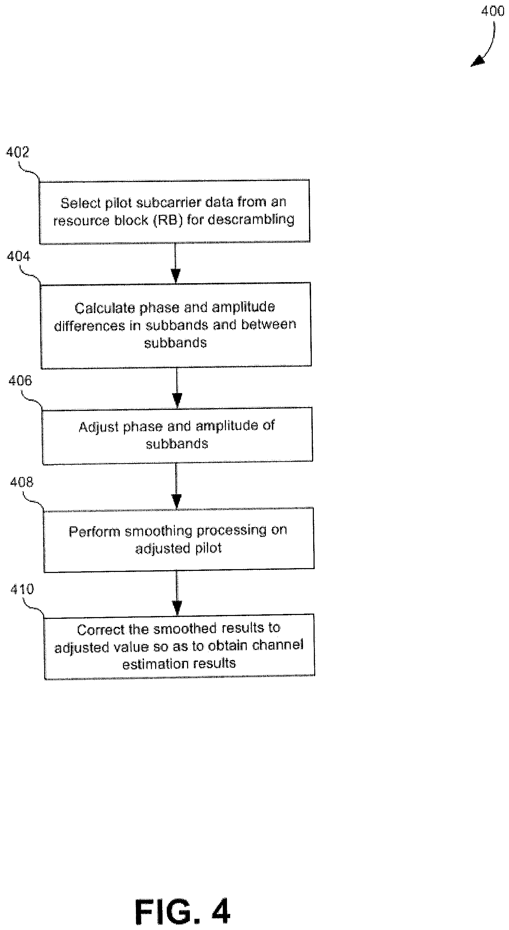

Turning now to **FIG. 4** which illustrates a method 400 for performing processing of communication signals, according to a further embodiment of the invention. At process block 402, pilot subcarrier data is selected from an resource block (RB) for descrambling. Then, the phase and amplitude differences in the subbands and between subbands is calculated (process block 404). Further, the phase and amplitude of the subbands is adjusted (process block 406).

At process block 408, smoothing processing on the adjusted pilot is performed, and the smoothed results are corrected to adjusted values so as to obtain channel estimation results (process block 410).

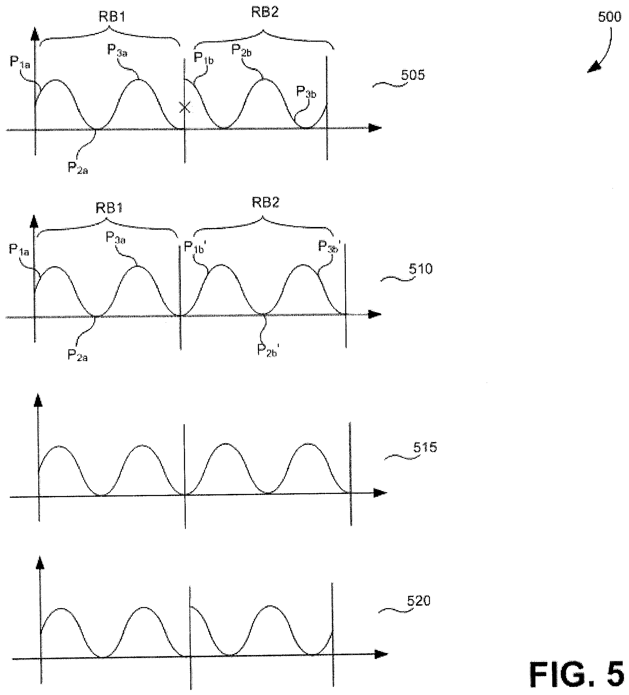

Turning now to **FIG. 5****.** The process is performed in a frequency domain which provides multiple RBs, which obtain pilot subcarriers from each respective RB, and then descramble the pilot subcarriers. Graph 505 illustrates the original unprocessed wave. At the X, the wave frequencies are not smoothed. At graph 510 the phase and amplitude have been shifted to provide a smooth and continuous wave.

To calculate phase differences among pilot subcarriers within each RB (*e.g.,* RB1 has 3 pilot subcarriers, P₁ₐ, P₂ₐ, P₃ₐ, the phase differences are determined between them, and for example, their average difference are determined). To calculate phase difference between corresponding pilot subcarriers of different RB (*e.g.,* RB1 has , P₁ₐ, P₂ₐ, P₃ₐ, and RB2 has, P_{1b}, P_{2b}, P_{3b}). The computational differences is: P₁ₐ v. P_{1b}, P₂ₐ v. P_{2b}, and P₃ₐ v. P_{3b}). Hence, the computational differences result in P_{1b}', P_{2b}', and P_{3b}', which results in the smooth waveform of graph 515. Then, the waveform can be reverted back to the original waveform as in Table 520. Adjustment is to be performed to make the adjacent RB channels continuous in frequency domain (*i.e.,* one goal is to help smooth the RB).

In one embodiment, to perform smoothing a smoothing filter (e.g., Weiner filter, Fourier transforms, etc.) may be applied on the RBs, and then the phase/amplitude may be restored.

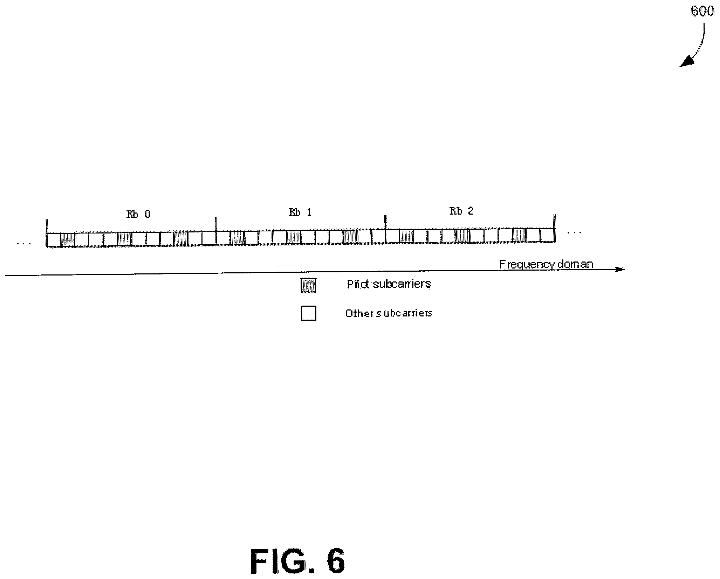

Referring next to **FIG. 6****,** which illustrates resources which are assigned to a terminal on a frequency domain in an OFDM symbol in an RB (subband), which needs to perform channel estimation by pilots in RBs, and channels among the RBs may be discontinuous due to beam forming, resulting in a significant error in the channel estimation results of the continuous channels in the frequency domain.

Adjusting the phase and amplitude of the RBs, for example, based on Rb_0, calculating phase and amplitude at which descrambled data is adjusted on each pilot of Rb_1, adjusting pilots in the RB_1, and then adjusting phase amplitude in Rb_2. In such a way, the channels are continuous in the whole band, and relevant information of the adjusted phase and amplitude of each RB is saved. Then, traditional channel estimation methods such as Wiener and time frequency domain transformation may be used for smoothing pilots to smooth data of all subcarriers in the band. Then, all subcarriers in the band are corrected to the originally adjusted phase and amplitude in RB.

For example, the subband Rb_0 includes a number of subcarriers. The subcarriers respectively have amplitude values a1a, a2a, a3a, etc., and phase values p1a, p2a, p3a, etc. Similarly, the subband Rb_1 has the same number of subcarriers as Rb_0, and the subcarriers respectively have amplitude values a1b, a2b, a3b, etc., and phase values p1b, p2b, p3b, etc. To determine continuity between corresponding subcarriers of Rb_0 and Rb_1, amplitude differences are determined, which are a1b-a1a, a2b-a2a, a3b-a3a, etc. The phases difference of corresponding subcarriers of Rb_0 and Rb_1 are p1b-p1a, p2b-p2a, p3b-p3a, etc. The amplitude differences among the subcarriers within a subband are a1a-a2a, a2a-a3a, etc. The phase differences among the subcarriers within a subband are p1a-p2a, p2a-p3a, etc. The average values of the amplitude and phase differences are then obtained. Based on these average values, the amount of adjustment needed to smoothen the signals (in frequency domain) is determined, and using which adjustments are performed. For example, as shown in FIG. 5, the disjoint signal 505 can be smoothened to continuous signal 510 as shown. To give an example, the average difference among subcarriers within the subband Rb_0 has a numerical value of 5, and the average difference among the subbands Rb 0, Rb_1, Rb_2, etc. has a numerical value of 12. These values (e.g., 5 and 12) are used to adjust the of Rb_1. There can be other variations as well.

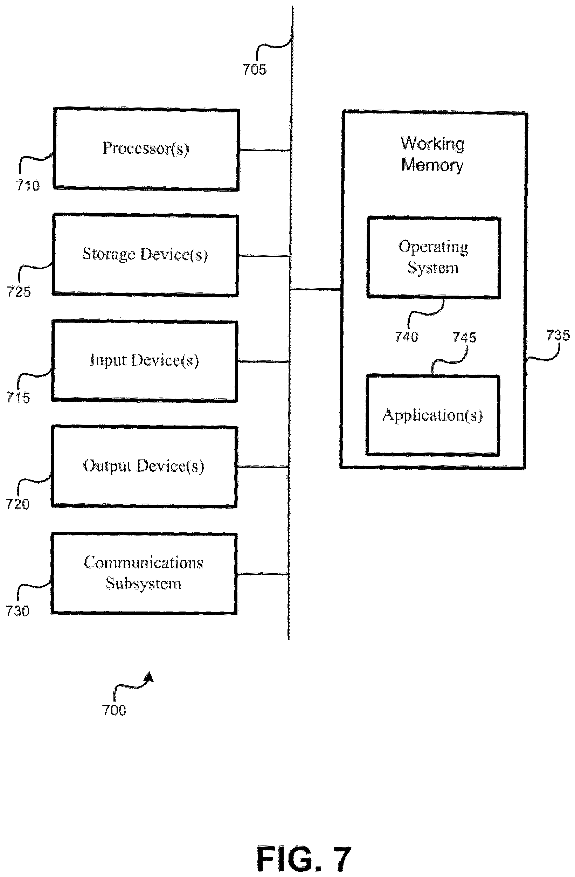

**FIG. 7** illustrates a block diagram of an exemplary computer system 700 that may be used to implement various embodiments. Some embodiments may employ a computer system (such as the computer system 700) to perform methods in accordance with various embodiments of the invention. The computer system may be implemented using various circuits, microchips, and connections within a mobile device. According to a set of embodiments, some or all of the procedures of such methods are performed by the computer system 700 in response to processor 710 executing one or more sequences of one or more instructions (which might be incorporated into the operating system 740 and/or other code, such as an application program 745) contained in the working memory 735. Such instructions may be read into the working memory 735 from another computer-readable medium, such as one or more of the storage device(s) 725. Merely by way of example, execution of the sequences of instructions contained in the working memory 735 might cause the processor(s) 710 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 700, various computer-readable media might be involved in providing instructions/code to processor(s) 710 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 725. Volatile media include, without limitation, dynamic memory, such as the working memory 735.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 710 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700.

The communications subsystem 730 (and/or components thereof) generally will receive signals, and the bus 705 then might carry the signals (and/or the data, instructions, etc. carried by the signals) to the working memory 735, from which the processor(s) 710 retrieves and executes the instructions. The instructions received by the working memory 735 may optionally be stored on a non-transitory storage device 725 either before or after execution by the processor(s) 710.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details are given in the description to provide a thorough understanding of example configurations (including implementations).

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

## Claims

1. A method (300) of processing communication signals, the method comprises:
receiving a communication signal in a time domain (302);
converting the communication signal to a frequency domain (304);
providing a plurality of resource blocks based on the communication signal in the frequency domain (306), the plurality of resource blocks including a first resource block and a second resource block;
selecting a first plurality of pilot signals from the first resource block and a second plurality of pilot signals from the second resource block (308);
determining a first set of phase and amplitude differences among the first plurality of pilot signals (310);
determining a second set of phase and amplitude differences among the second plurality of pilot signals (312);
determining a third set of phase and amplitude differences between the first plurality of pilot signals and the second plurality of pilot signals (314);
generating a first waveform by using at least the first and third set of phase and amplitude differences (316) to adjust one of the first plurality of pilot signals;
applying a smoothing filter against the first waveform to generate a second waveform (318);
generating a third waveform by using at least the first and third set of phase and amplitude differences (320) to perform a reverse adjustment to the second waveform; and
converting the third waveform from the frequency domain to the time domain (322).

2. The method of claim 1, further comprising determining a phase difference between a first pilot signal and a second pilot signal, wherein the first plurality of pilot signals includes the first pilot signal at a first position of the first resource block, and the second plurality of pilot signals includes the second pilot signals at the first position of the second resource block.

3. The method of claim 2, further comprising calculating the phase difference between the first pilot and the second pilot within the first resource block; and/or further comprising calculating the amplitude difference between the first pilot and the second pilot within the first resource block.

4. The method of claim 1, 2 or 3, wherein the smoothing filter comprises a Weiner filter and/or a discrete Fourier Transform.

5. The method of any preceding claim, further comprising generating the first waveform using at least the second set of phase and amplitude differences.

6. The method of any preceding claim, wherein the communication signal comprises an Orthogonal Frequency Division Multiplexing (OFDM) Signal; and/or wherein the communication signal is received via Long Term Evolution (LTE) communication network.

7. A system for processing communication signals, the system comprises:
a memory device; and
a computer processor in communication with the memory device, wherein the memory device includes sets of instructions when executed by the computer processor, cause the computer processor to:
receive a communication signal in a time domain (302);
convert the communication signal to a frequency domain (304);
provide a plurality of resource blocks based on the communication signal in the frequency domain (306), the plurality of resource blocks including a first resource block and a second resource block;
select a first plurality of pilot signals from the first resource block and a second plurality of pilot signals from the second resource block (308);
determine a first set of phase and amplitude differences among the first plurality of pilot signals (310);
determine a second set of phase and amplitude differences among the second plurality of pilot signals (312);
determine a third set of phase and amplitude differences between the first plurality of pilot signals and the second plurality of pilot signals (314);
generate a first waveform by using at least the first and third set of phase and amplitude differences (316) to adjust one of the first plurality of pilot signals;
apply a smoothing filter against the first waveform to generate a second waveform (318);
generate a third waveform by using at least the first and third set of phase and amplitude differences (320) to perform a reverse adjustment to the second waveform; and
convert the third waveform from the frequency domain to the time domain (322).

8. The system of claim 7, wherein the sets of instructions further cause the computer processor to determine a phase difference between a first pilot signal and a second pilot signal, wherein the first plurality of pilot signals including the first pilot signal at a first position of the first resource block, and the second plurality of pilot signals including the second pilot signals at the first position of the second resource block.

9. The system of claim 8, wherein the sets of instructions further cause the computer processor to calculate the phase difference between the first pilot and the second pilot within the first resource block; and/or wherein the sets of instructions further cause the computer processor to calculate the amplitude difference between the first pilot and the second pilot within the first resource block.

10. The system of any of claims 7 to 9, wherein the sets of instructions further cause the computer processor to generate the first waveform using at least the second set of phase and amplitude differences.

11. A computer-readable medium for processing communication signals, the computer-readable medium has sets of instruction stored thereon which, when executed by a computer cause the computer to:
receive a communication signal in a time domain (302);
convert the communication signal to a frequency domain (304);
provide a plurality of resource blocks based on the communication signal in the frequency domain (306), the plurality of resource blocks including a first resource block and a second resource block;
select a first plurality of pilot signals from the first resource block and a second plurality of pilot signals from the second resource block (308);
determine a first set of phase and amplitude differences among the first plurality of pilot signals (310);
determine a second set of phase and amplitude differences among the second plurality of pilot signals (312);
determine a third set of phase and amplitude differences between the first plurality of pilot signals and the second plurality of pilot signals (314);
generate a first waveform by using at least the first and third set of phase and amplitude differences (316) to adjust one of the first plurality of pilot signals;
apply a smoothing filter against the first waveform to generate a second waveform (318);
generate a third waveform by using at least the first and third set of phase and amplitude differences (320) to perform a reverse adjustment to the second waveform; and
convert the third waveform from the frequency domain to the time domain (322).

12. The computer-readable medium of claim 11, wherein the sets of instructions further cause the computer to calculate a phase difference between a first pilot signal and a second pilot signal, wherein the first plurality of pilot signals including the first pilot signal at a first position of the first resource block, and the second plurality of pilot signals including the second pilot signals at the first position of the second resource block.

13. The computer-readable medium of claim 12, wherein the sets of instructions further cause the computer to calculate the phase difference between the first pilot and the second pilot within the first resource block; and/or wherein the sets of instructions further cause the computer to calculate the amplitude difference between the first pilot and the second pilot within the first resource block.

14. The computer-readable medium of claim 11, 12 or 13, wherein the sets of instructions further cause the computer to generate the first waveform using at least the second set of phase and amplitude differences.

15. The computer-readable medium of claim 11, 12, 13 or 14, wherein the communication signal is received via Long Term Evolution (LTE) communication network.

## Patentansprüche

1. Verfahren (300) zur Verarbeitung von Fernmeldesignalen, wobei das Verfahren umfasst:
Empfang eines Fernmeldesignals in einem Zeitbereich (302),
Konvertieren des Fernmeldesignals in einen Frequenzbereich (304),
Bereitstellung mehrerer Resourceblöcke auf der Basis des Fernmeldesignals im Frequenzbereich (306), wobei die mehreren Resourceblöcke einen ersten Resourceblock und einen zweiten Resourceblock umfassen,
Auswahl einer ersten Mehrzahl von Pilotsignalen aus dem ersten Resourceblock und einer zweiten Mehrzahl von Pilotsignalen aus dem zweiten Resourceblock (308),
Bestimmung einer ersten Menge von Phasen- und Amplitudendifferenzen innerhalb der ersten Mehrzahl von Pilotsignalen (310),
Bestimmung einer zweiten Menge von Phasen- und Amplitudendifferenzen innerhalb der zweiten Mehrzahl von Pilotsignalen (312),
Bestimmung einer dritten Menge von Phasen- und Amplitudendifferenzen zwischen der ersten Mehrzahl von Pilotsignalen und der zweiten Mehrzahl von Pilotsignalen (314),
Erzeugung einer ersten Wellenform unter Verwendung mindestens der ersten und der dritten Menge von Phasen- und Amplitudendifferenzen (316) zur Justierung eines aus der ersten Mehrzahl von Pilotsignalen,
Anwendung eines Glättungsfilters auf die erste Wellenform zur Erzeugung einer zweiten Wellenform (318),
Erzeugung einer dritten Wellenform unter Verwendung mindestens der ersten und der dritten Menge von Phasen- und Amplitudendifferenzen (320) zur Ausführung einer Rückjustierung der zweiten Wellenform, und
Konvertieren der dritten Wellenform aus dem Frequenzbereich in den Zeitbereich (322).

2. Verfahren nach Patentanspruch 1, außerdem die Bestimmung einer Phasendifferenz zwischen einem ersten Pilotsignal und einem zweiten Pilotsignal umfassend, wobei die erste Mehrzahl von Pilotsignalen das erste Pilotsignal an einer ersten Stelle des ersten Resourceblocks enthält und die zweite Mehrzahl von Pilotsignalen die zweiten Pilotsignale an der ersten Stelle des zweiten Resourceblocks enthält.

3. Verfahren nach Patentanspruch 2, außerdem die Berechnung der Phasendifferenz zwischen dem ersten Pilotsignal und dem zweiten Pilotsignal innerhalb des ersten Resourceblocks umfassend, und/oder außerdem die Berechnung der Amplitudendifferenz zwischen dem ersten Pilotsignal und dem zweiten Pilotsignal innerhalb des ersten Resourceblocks umfassend.

4. Verfahren nach Patentanspruch 1, 2 oder 3, in dem der Glättungsfilter einen Wiener-Filter und/oder eine diskrete FourierTransformation umfasst.

5. Verfahren nach irgendeinem der vorangehenden Patentansprüche, außerdem die Erzeugung der ersten Wellenform unter Verwendung mindestens der zweiten Menge von Phasen- und Ämpiitudendifferenzen umfassend.

6. Verfahren nach irgendeinem der vorangehenden Patentansprüche, in dem das Fernmeldesignal ein OFDM(Orthogonal Frequency Division Multiplexing - Orthogonales Frequenzmultiplexverfahren)-Signal umfasst und/oder in dem das Fernmeldesignal über ein LTE(Long Term Evolution)-Fernmeldenetzwerk empfangen wird.

7. System zur Verarbeitung von Fernmeldesignalen, wobei das System umfasst:
eine Speichervorrichtung, und
einen Computerprozessor in Datenaustausch mit der Speichervorrichtung, wobei die Speichervorrichtung Befehlssätze enthält, die bei Ausführung durch den Computerprozessor den Computerprozessor veranlassen zu:
Empfang eines Fernmeldesignals in einem Zeitbereich (302),
Konvertieren des Fernmeldesignals in einen Frequenzbereich (304),
Bereitstellung mehrerer Resourceblöcke auf der Basis des Fernmeldesignals im Frequenzbereich (306), wobei die mehreren Resourceblöcke einen ersten Resourceblock und einen zweiten Resourceblock umfassen,
Auswahl einer ersten Mehrzahl von Pilotsignalen aus dem ersten Resourceblock und einer zweiten Mehrzahl von Pilotsignalen aus dem zweiten Resourceblock (308),
Bestimmung einer ersten Menge von Phasen- und Ampiitudendifferenzen innerhalb der ersten Mehrzahl von Pilotsignalen (310),
Bestimmung einer zweiten Menge von Phasen- und Amplitudendifferenzen innerhalb der zweiten Mehrzahl von Pilotsignalen (312),
Bestimmung einer dritten Menge von Phasen- und Amplitudendifferenzen zwischen der ersten Mehrzahl von Pilotsignalen und der zweiten Mehrzahl von Pilotsignalen (314),
Erzeugung einer ersten Wellenform unter Verwendung mindestens der ersten und der dritten Menge von Phasen- und Amplitudendifferenzen (316) zur Justierung eines aus der ersten Mehrzahl von Pilotsignalen,
Anwendung eines Glättungsfilters auf die erste Wellenform zur Erzeugung einer zweiten Wellenform (318),
Erzeugung einer dritten Wellenform unter Verwendung mindestens der ersten und der dritten Menge von Phasen- und Amplitudendifferenzen (320) zur Ausführung einer Rückjustierung der zweiten Wellenform, und
Konvertieren der dritten Wellenform aus dem Frequenzbereich in den Zeitbereich (322).

8. System nach Patentanspruch 7, in dem die Befehlssätze den Computerprozessor außerdem zur Bestimmung einer Phasendifferenz zwischen einem ersten Pilotsignal und einem zweiten Pilotsignal veranlassen, wobei die erste Mehrzahl von Pilotsignalen das erste Pilotsignal an einer ersten Stelle des ersten Resourceblocks enthält und die zweite Mehrzahl von Pilotsignalen die zweiten Pilotsignale an der ersten Stelle des zweiten Resourceblocks enthält.

9. System nach Patentanspruch 8, in dem die Befehlssätze den Computerprozessor außerdem zur Berechnung der Phasendifferenz zwischen dem ersten Pilotsignal und dem zweiten Pilotsignal innerhalb des ersten Resourceblocks umfassen, und/oder in dem die Befehlssätze den Computerprozessor außerdem zur Berechnung der Amplitudendifferenz zwischen dem ersten Pilotsignal und dem zweiten Pilotsignal innerhalb des ersten Resourceblocks veranlassen.

10. System nach irgendeinem der Patentansprüche 7 bis 9, in dem die Befehlssätze den Computerprozessor außerdem zur Erzeugung der ersten Wellenform unter Verwendung mindestens der zweiten Menge von Phasen- und Amplitudendifferenzen veranlassen.

11. Computerlesbares Medium zur Verarbeitung von Fernmeldesignalen, wobei das computerlesbare Medium Befehlssätze gespeichert enthält, die bei Ausführung durch den Computer den Computer veranlassen zu:
Empfang eines Fernmeldesignals in einem Zeitbereich (302),
Konvertieren des Fernmeldesignals in einen Frequenzbereich (304),
Bereitstellung mehrerer Resourceblöcke auf der Basis des Fernmeldesignals im Frequenzbereich (306), wobei die mehreren Resourceblöcke einen ersten Resourceblock und einen zweiten Resourceblock umfassen,
Auswahl einer ersten Mehrzahl von Pilotsignalen aus dem ersten Resourceblock und einer zweiten Mehrzahl von Pilotsignalen aus dem zweiten Resourceblock (308),
Bestimmung einer ersten Menge von Phasen- und Amplitudendifferenzen innerhalb der ersten Mehrzahl von Pilotsignalen (310),
Bestimmung einer zweiten Menge von Phasen- und Amplitudendifferenzen innerhalb der zweiten Mehrzahl von Pilotsignalen (312),
Bestimmung einer dritten Menge von Phasen- und Amplitudendifferenzen zwischen der ersten Mehrzahl von Pilotsignalen und der zweiten Mehrzahl von Pilotsignalen (314),
Erzeugung einer ersten Wellenform unter Verwendung mindestens der ersten und der dritten Menge von Phasen- und Amplitudendifferenzen (316) zur Justierung eines aus der ersten Mehrzahl von Pilotsignalen,
Anwendung eines Giättungsfilters auf die erste Wellenform zur Erzeugung einer zweiten Wellenform (318),
Erzeugung einer dritten Wellenform unter Verwendung mindestens der ersten und der dritten Menge von Phasen- und Amplitudendifferenzen (320) zur Ausführung einer Rückjustierung der zweiten Wellenform, und
Konvertieren der dritten Wellenform aus dem Frequenzbereich in den Zeitbereich (322).

12. Computerlesbares Medium nach Patentanspruch 11, in dem die Befehlssätze den Computer außerdem zur Berechnung einer Phasendifferenz zwischen einem ersten Pilotsignal und einem zweiten Pilotsignal veranlassen, wobei die erste Mehrzahl von Pilotsignalen das erste Pilotsignal an einer ersten Stelle des ersten Resourceblocks enthält und die zweite Mehrzahl von Pilotsignalen die zweiten Pilotsignale an der ersten Stelle des zweiten Resourceblocks enthält.

13. Computerlesbares Medium nach Patentanspruch 12, in dem die Befehlssätze den Computer außerdem zur Berechnung der Phasendifferenz zwischen dem ersten Pilotsignal und dem zweiten Pilotsignal innerhalb des ersten Resourceblocks umfassen, und/oder in dem die Befehlssätze den Computer außerdem zur Berechnung der Amplitudendifferenz zwischen dem ersten Pilotsignal und dem zweiten Pilotsignal innerhalb des ersten Resourceblocks veranlassen.

14. Computerlesbares Medium nach Patentanspruch 11, 12 oder 13, in dem die Befehlssätze den Computer außerdem zur Erzeugung der ersten Wellenform unter Verwendung mindestens der zweiten Menge von Phasen- und Amplitudendifferenzen veranlassen,

15. Computerlesbares Medium nach Patentanspruch 11, 12, 13 oder 14, in dem das Fernmeldesignal über ein LTE(Long Term Evolution)-Fernmeldenetzwerk empfangen wird.

## Revendications

1. Procédé (300) de traitement de signaux de communication, le procédé comprenant :
la réception d'un signal de communication dans un domaine temporel (302) ;
la conversion du signal de communication en un domaine fréquentiel (304) ;
la fourniture d'une pluralité de blocs de ressources sur la base du signal de communication dans le domaine fréquentiel (306), la pluralité de blocs de ressources incluant un premier bloc de ressources et un deuxième bloc de ressources ;
la sélection d'une première pluralité de signaux pilotes à partir du premier bloc de ressources et d'une deuxième pluralité de signaux pilotes à partir du deuxième bloc de ressources (308) ;
la détermination d'un premier ensemble de différences de phase et d'amplitude parmi la première pluralité de signaux pilotes (310) ;
la détermination d'un deuxième ensemble de différences de phase et d'amplitude parmi la deuxième pluralité de signaux pilotes (312) ;
la détermination d'un troisième ensemble de différences de phase et d'amplitude entre la première pluralité de signaux pilotes et la deuxième pluralité de signaux pilotes (314) ;
la génération d'une première forme d'onde en utilisant au moins les premier et troisième ensembles de différences de phase et d'amplitude (316) afin d'ajuster un signal de la première pluralité de signaux pilotes ;
l'application d'un filtre de lissage contre la première forme d'onde afin de générer une deuxième forme d'onde (318) ;
la génération d'une troisième forme d'onde en utilisant au moins les premier et troisième ensembles de différences de phase et d'amplitude (320) afin d'effectuer un ajustement inverse sur la deuxième forme d'onde ; et
la conversion de la troisième forme d'onde du domaine fréquentiel au domaine temporel (322).

2. Procédé selon la revendication 1, comprenant en outre la détermination d'une différence de phase entre un premier signal pilote et un deuxième signal pilote, dans lequel la première pluralité de signaux pilotes inclut le premier signal pilote dans une première position du premier bloc de ressources, et la deuxième pluralité de signaux pilotes inclut les deuxièmes signaux pilotes dans la première position du deuxième bloc de ressources.

3. Procédé selon la revendication 2, comprenant en outre le calcul de la différence de phase entre le premier pilote et le deuxième pilote dans le premier bloc de ressources ; et/ou comprenant en outre le calcul de la différence d'amplitude entre le premier pilote et le deuxième pilote dans le premier bloc de ressources.

4. Procédé selon la revendication 1, 2 ou 3, dans lequel le filtre de lissage comprend un filtre de Weiner et/ou une transformée de Fourier discrète.

5. Procédé selon l'une quelconque des revendications précédentes, comprenant en outre la génération de la première forme d'onde à l'aide du deuxième ensemble de différences de phase et d'amplitude.

6. Procédé selon l'une quelconque des revendications précédentes, dans lequel le signal de communication comprend un signal de multiplexage par répartition orthogonale de la fréquence (OFDM) ; et/ou dans lequel le signal de communication est reçu *via* un réseau de communication d'évolution à long terme (LTE).

7. Système pour traiter des signaux de communication, le système comprenant :
un dispositif de mémoire ; et
un processeur informatique en communication avec le dispositif de mémoire, dans lequel le dispositif de mémoire inclut des ensembles d'instructions qui, lorsqu'elles sont exécutées par le processeur informatique, amènent le processeur informatique à :
recevoir un signal de communication dans un domaine temporel (302) ;
convertir le signal de communication en un domaine fréquentiel (304) ;
fournir une pluralité de blocs de ressources sur la base du signal de communication dans le domaine fréquentiel (306), la pluralité de blocs de ressources incluant un premier bloc de ressources et un deuxième bloc de ressources ;
sélectionner une première pluralité de signaux pilotes à partir du premier bloc de ressources et une deuxième pluralité de signaux pilotes à partir du deuxième bloc de ressources (308) ;
déterminer un premier ensemble de différences de phase et d'amplitude parmi la première pluralité de signaux pilotes (310) ;
déterminer un deuxième ensemble de différences de phase et d'amplitude parmi la deuxième pluralité de signaux pilotes (312) ;
déterminer un troisième ensemble de différences de phase et d'amplitude entre la première pluralité de signaux pilotes et la deuxième pluralité de signaux pilotes (314) ;
générer une première forme d'onde en utilisant au moins les premier et troisième ensembles de différences de phase et d'amplitude (316) afin d'ajuster un signal de la première pluralité de signaux pilotes ;
appliquer un filtre de lissage contre la première forme d'onde afin de générer une deuxième forme d'onde (318) ;
générer une troisième forme d'onde en utilisant au moins les premier et troisième ensembles de différences de phase et d'amplitude (320) afin d'effectuer un ajustement inverse sur la deuxième forme d'onde ; et
convertir la troisième forme d'onde du domaine fréquentiel au domaine temporel (322).

8. Système selon la revendication 7, dans lequel les ensembles d'instructions amènent en outre le processeur informatique à déterminer une différence de phase entre un premier signal pilote et un deuxième signal pilote, dans lequel la première pluralité de signaux pilotes inclut le premier signal pilote dans une première position du premier bloc de ressources, et la deuxième pluralité de signaux pilotes inclut les deuxièmes signaux pilotes dans la première position du deuxième bloc de ressources.

9. Système selon la revendication 8, dans lequel les ensembles d'instructions amènent en outre le processeur informatique à calculer la différence de phase entre le premier pilote et le deuxième pilote dans le premier bloc de ressources ; et/ou dans lequel les ensembles d'instructions amènent en outre le processeur informatique à calculer la différence d'amplitude entre le premier pilote et le deuxième pilote dans le premier bloc de ressources.

10. Système selon l'une quelconque des revendications 7 à 9, dans lequel les ensembles d'instructions amènent en outre le processeur informatique à générer la première forme d'onde en utilisant au moins le deuxième ensemble de différences de phase et d'amplitude.

11. Support lisible par ordinateur pour traiter des signaux de communication, le support lisible par ordinateur disposant d'ensembles d'instructions stockés sur celui-ci qui, lorsqu'ils sont exécutés par un ordinateur, amènent l'ordinateur à :
recevoir un signal de communication dans un domaine temporel (302) ;
convertir le signal de communication en un domaine fréquentiel (304) ;
fournir une pluralité de blocs de ressources sur la base du signal de communication dans le domaine fréquentiel (306), la pluralité de blocs de ressources incluant un premier bloc de ressources et un deuxième bloc de ressources ;
sélectionner une première pluralité de signaux pilotes à partir du premier bloc de ressources et une deuxième pluralité de signaux pilotes à partir du deuxième bloc de ressources (308) ;
déterminer un premier ensemble de différences de phase et d'amplitude parmi la première pluralité de signaux pilotes (310) ;
déterminer un deuxième ensemble de différences de phase et d'amplitude parmi la deuxième pluralité de signaux pilotes (312) ;
déterminer un troisième ensemble de différences de phase et d'amplitude entre la première pluralité de signaux pilotes et la deuxième pluralité de signaux pilotes (314) ;
générer une première forme d'onde en utilisant au moins les premier et troisième ensembles de différences de phase et d'amplitude (316) afin d'ajuster un signal de la première pluralité de signaux pilotes ;
appliquer un filtre de lissage contre la première forme d'onde afin de générer une deuxième forme d'onde (318) ;
générer une troisième forme d'onde en utilisant au moins les premier et troisième ensembles de différences de phase et d'amplitude (320) afin d'effectuer un ajustement inverse sur la deuxième forme d'onde ; et
convertir la troisième forme d'onde du domaine fréquentiel au domaine temporel (322).

12. Support lisible par ordinateur selon la revendication 11, dans lequel les ensembles d'instructions amènent en outre l'ordinateur à calculer une différence de phase entre un premier signal pilote et un deuxième signal pilote, dans lequel la première pluralité de signaux pilotes inclut le premier signal pilote dans une première position du premier bloc de ressources, et la deuxième pluralité de signaux pilotes inclut les deuxièmes signaux pilotes dans la première position du deuxième bloc de ressources.

13. Support lisible par ordinateur selon la revendication 12, dans lequel les ensembles d'instructions amènent en outre l'ordinateur à calculer la différence de phase entre le premier pilote et le deuxième pilote dans le premier bloc de ressources ; et/ou dans lequel les ensembles d'instructions amènent en outre l'ordinateur à calculer la différence d'amplitude entre le premier pilote et le deuxième pilote dans le premier bloc de ressources.

14. Support lisible par ordinateur selon la revendication 11, 12 ou 13, dans lequel les ensembles d'instructions amènent en outre l'ordinateur à générer la première forme d'onde en utilisant au moins le deuxième ensemble de différences de phase et d'amplitude.

15. Support lisible par ordinateur selon la revendication 11, 12, 13 ou 14, dans lequel le signal de communication est reçu *via* un réseau de communication d'évolution à long terme (LTE).
